# EUROPEAN PATENT SPECIFICATION

(11) **EP 0 681 148 B1**
(45) Date of publication and mention of the grant of the patent: **06.12.2000**
(21) Application number: 95302911.3
(22) Date of filing: 28.04.1995
(51) Int. Cl.: F24D 10/00, F24D 19/10

(54) **Flow control system**
Durchflussregelsystem
Système de commande de débit

(30) Priority: 06.05.1994 GB 9409022
(43) Date of publication of application: 08.11.1995
(73) Proprietor: INTER ALBION LIMITED, Potters Bar, Hertfordshire EN6 1TL (GB)
(72) Inventor: Beale, David, Potters Bar, Hertfordshire EN6 1LU (GB)
(74) Representative: Richards, David John

(56) References cited:
- DE-A- 3 123 875
- DE-A- 3 340 351

## Description

The present invention relates to the flow control of fluid in a heating system of the type which includes a heat source, such as a boiler, and a thermal load providing for example space heating and/or heating of water, in particular but not exclusively, for domestic use.

In such a system, the thermal load may comprise conventional radiators or convector type heaters for space heating. The load may also comprise heat exchangers, so that hot water for domestic consumption may also be provided through heat exchange with the circulated hot fluid. Such components are designed to operate at maximum efficiency over a range of pressures or flow rates. Variations in pressure or flow resistance in the system upstream of such a thermal load, or changes in the flow restriction provided within the thermal load itself can cause pressures or flow rates to increase above the optimum maximum, placing an excessive strain on components in the system. For example, where the thermal load comprises a plurality of radiators, excessive strain can be applied to their control valves, affecting their reliable control function. Excessive pressures can also lead to problems with valves such as vibrations or whining.

These problems exist particularly in systems of the type where a single central boiler is employed to provide heating for a large number of dwellings, such as flats in a block of flats. In the individual dwellings, the hot water is used to provide space heating, as well as being used by instantaneous-type water heaters. These types of systems are subject to widely varying flows and pressures as flow resistances in individual dwellings vary.

A common type of system has the thermal load disposed in a flow loop arranged at a particular dwelling around which the heating fluid is circulated by a pump, with an inlet conduit arranged to supply hot water into the loop, and a return conduit arranged to withdraw a proportion of the circulating fluid for return to the boiler. This type of system generally employs a non-return valve in the loop to prevent any possible flow from the inlet directly to the return conduit around the loop in the reverse direction. This system particularly suffers the problem described above that the motive power of the source is added to that of the pump, so that pressure or flow rate increases upstream of the loop can give rise to excessive pressures at the thermal load. Such systems generally include control valves sited at each dwelling which are thermostatically controlled in dependence upon the temperature in the dwelling, and as these adjust the flow at a particular dwelling the flow available for other dwellings can vary. Also, in a particular dwelling, if for example radiators in particular rooms are manually turned down when the temperature is below a predetermined value, such a thermostatically controlled valve would allow oversupply of heating fluid to the system for that dwelling.

It is known to provide flow regulation valves for each dwelling which attempt to iron out differences in flow rates which arise from the different flow resistances experienced between the boiler and that particular dwelling, in order to "balance" the flow to each dwelling. Such a system balancing is generally carried out through a process of manual adjustment of the regulating valve at each dwelling, which is both time consuming and difficult. Also, providing fixed regulator valves can only provide approximate balancing; as soon as the flow is disrupted in any particular dwelling, such as by operation of a thermostatic-type valve in a particular dwelling, the flow at any other dwelling is shifted from this balanced condition.

A further device commonly employed to provide system balancing comprises a differential pressure regulator inserted in the inlet conduit for each dwelling and connected between inlet and return conduits so that the valve opening is dependent upon the pressure difference therebetween. This valve is able to ensure constant pressure differential and flow rate to the thermal load in that dwelling. Such devices are, however, expensive and it is also still necessary to manually adjust the differential pressure regulator in order to limit the maximum flow rate on installation. It is also still generally necessary to provide a separate thermostatically controlled valve to reduce flow as the heat requirement reduces.

It has been proposed to provide automatic adjustment of such differential pressure regulators by employing an electrically driven actuator which responds to a signal from a temperature sensor provided in each dwelling, thereby in effect providing both pressure and temperature control with the single valve. However, such a device is particularly expensive and bulky.

A prior document, DE-A-3340351 discloses a system and a method according to the preamble of claims 1 and 14.

It is accordingly an objection of the present invention to mitigate the problems of the prior art.

According to a first aspect of the present invention this is accomplished with a system according to the characterising clause of claim 1.

In a further aspect the present invention resides in a method according to the characterising clause of claim 14.

In this way, an oversupply of heating fluid to the thermal load, that is an oversupply in terms of flow rate of fluid, which could otherwise arise as a result of a flow restriction elsewhere in the system, or through a flow restriction in the thermal load itself can be avoided in an effective manner. Simple, compact and relatively inexpensive components can be utilised to effect the required control.

Preferably, the conduit arrangement comprises a connecting conduit which connects said inlet conduit and return conduit adapted to receive hot fluid from the inlet conduit in response to an oversupply of hot fluid, said first temperature sensor being disposed in the return conduit upstream of the connecting conduit. The second temperature sensor may be disposed in the return conduit downstream of the connecting conduit, or in the connecting conduit itself.

In one embodiment the flow control conduit arrangement consists of an unrestricted conduit connecting the inlet and return conduits such that a loop is formed with the thermal load around which fluid circulates, into which hot fluid is injected via the fluid inlet conduit, and from which a proportion of the cooled fluid is removed via the fluid return line, whereby a condition of oversupply of hot fluid results in a reverse flow from the inlet conduit to return conduit in said connecting conduit. This affords a particularly simple yet effective arrangement allowing detection of and control in response to an oversupply condition.

In a further development of this system the flow control conduit arrangement further comprises an additional by-pass conduit conduit connected between the inlet conduit and the connecting conduit, and a pressure actuated valve is provided within this by-pass conduit, which is adapted to open in response to a pressure in the inlet conduit in excess of a predetermined value. This by-pass functions as a pressure limit, preventing a pressure in excess of an absolute predetermined value from acting on the thermal load.

In an alternative embodiment the flow control conduit arrangement consists of a conduit portion connecting said inlet and return conduits, which connecting portion is provided with a pressure actuated valve adapted to open at a pressure in excess of the predetermined value.

The flow regulation means of these embodiments preferably comprise solenoid valves.

In a still further alternative embodiment, the flow control conduit arrangement further comprises a by-pass conduit connected between the inlet conduit downstream of the flow regulator means and the connecting conduit, with the second temperature sensor disposed in the connection conduit at a point between connections with the inlet conduit and by-pass conduit, wherein a pressure actuated valve is located in the by-pass portion and is adapted to open in response to a pressure at the pump outlet in excess of a predetermined value, and wherein the flow regulator means comprises a variable speed pump, said control means being arranged to adjust the pump speed in response to a detected temperature differential. This arrangement is particularly suitable for controlling the supply of fluid to a plurality of separate dwellings each of which has a thermal load.

Preferably, the pressure actuated valves are simple spring biased valves.

The control means is preferably a suitably programmed microprocessor which receives signals from the temperature sensors, and controls the flow regulation means, either the solenoid valve, or variable speed pump.

Embodiments of the invention are now described by way of example only with reference to the following drawings in which:-
Figure 1 is a schematic view of a system in accordance with the present invention;
Figure 1A is a partial view of a system being a modification of the system shown in Figure 1;
Figure 2 is a schematic view of a second embodiment of a system in accordance with the present invention;
Figure 3 is a schematic view of a third embodiment of a system in accordance with the present invention; and
Figure 4 is a schematic view of a fourth embodiment of a system in accordance with the invention.

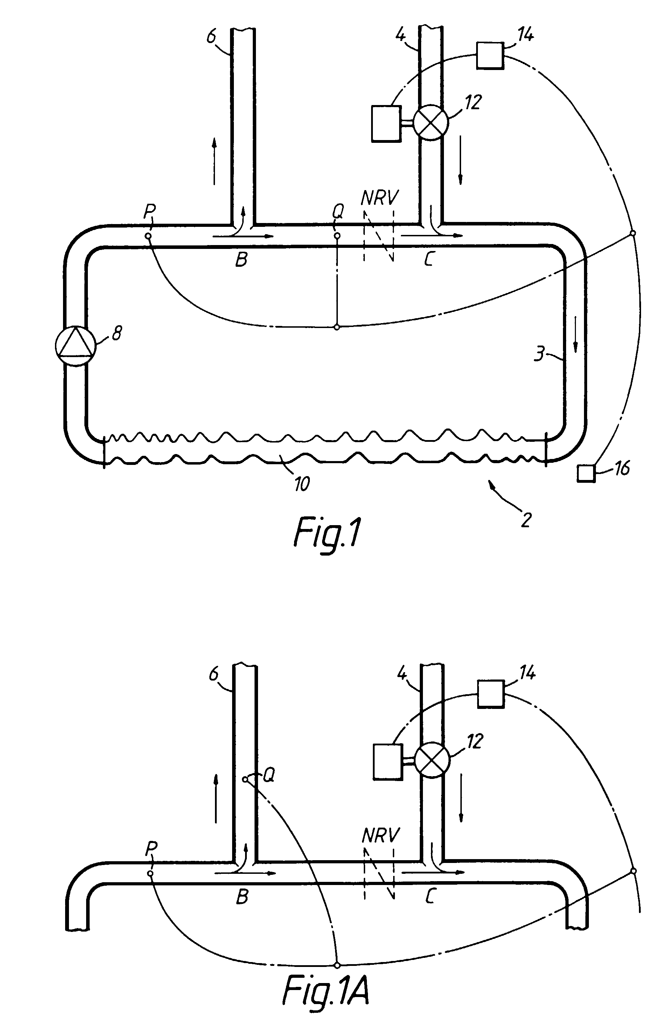

Turning firstly to Figure 1 of the drawings, a heating system referred to generally by numeral 2 is shown, which includes a loop 3, and inlet conduit 4 to which heated fluid is supplied from a boiler (not shown) to the loop 3, and a return conduit 6 through which at least a proportion of circulated cooled fluid is returned to the boiler. Pump 8 circulates fluid within the system in the directions as indicated by the arrows. A thermal load, which can include radiators for space heating or convector-type heaters, and/or heat exchangers for heating water for domestic use or the like, is indicated by numeral 10. The loop 3 includes a region B,C between return and inlet conduits 6,4. A flow regulating valve 12 is disposed in the inlet conduit 4 in order to control the flow of injected hot water. This regulating valve 12 is a solenoid valve electrically controlled by controller 14 which is preferably a suitably programmed microprocessor. Temperature sensor 16 is provided to detect the dwelling air temperature, whilst the temperature sensors P,Q are disposed within the loop 3 at positions upstream of the return conduit 6, and within the loop section BC respectively. Sensors P,Q are preferably conventional thermistors. The outputs of temperature sensors 16, P,Q are connected to the controller 14. In a normal operational condition the flow regulating valve 12 is continually automatically adjusted to control inlet flow to meet the thermal load requirement indicated by the temperature sensor 16. There is a clockwise circulation of water around the loop 3. In this condition, sensors P,Q will indicate at least approximately the same temperature. If however, there is an oversupply of hot water, which might arise from increased pressure or flow of water at the inlet conduit 4 (for example as a result of the flow being restricted elsewhere in a larger system), or because of a flow restriction at the radiators 10 (which would arise if for example the radiators were manually turned down or off, despite a low indicated air temperature), then the excess flow leads to a reversal of flow in the loop section B,C, with fluid flowing from C to B. Such a condition is detected by the temperature sensor Q which will indicate a higher temperature than that indicated by sensor P. In response to such a detected temperature differential, controller 14 is programmed to restrict the flow regulating valve 12 to reduce the flow of incoming fluid sufficiently to re-establish the normal flow direction in section BC. This control occurs irrespective of the temperature condition indicated by sensor 16. The controller 14 will be required to have an appropriate logic hierarchy to override the normal temperature dependent control function.

Figure 1A shows a modification of the system shown in Fig. 1, in which the temperature sensor Q is located in an alternative position. In this embodiment, temperature sensor Q is disposed in return conduit 6 downstream of the loop section BC. Hot water entering BC from inlet 4 due to an oversupply condition, mixes with the cooled water in return conduit 6 and sensor Q detects a rise in temperature relative to sensor P; controller 14 reacts by restricting flow regulating valve 12 to reduce the flow of incoming liquid. In the arrangement shown in Fig. 1, the oversupply condition is more readily detected but there is no indication of the magnitude of the by-pass; for this reason, a relatively slow corrective action must be employed. In the arrangement shown in Fig. 1A, the magnitude of the difference reveals the scale of the by-pass and a faster, more positive correction can be made by controller 14.

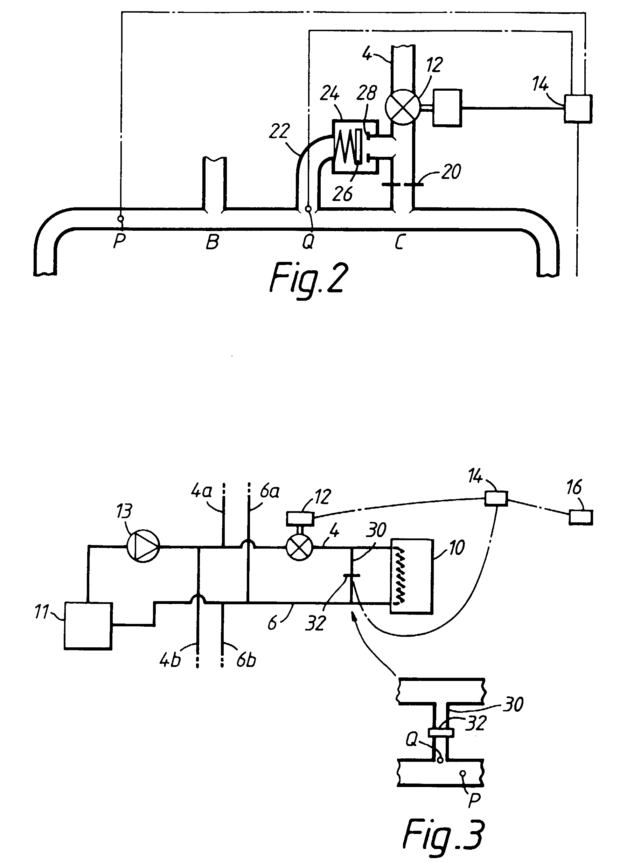

In an alternative embodiment, illustrated in Figure 2, an additional by-pass is incorporated in order to provide an additional flow limiting function. In this embodiment, the arrangement of Figure 1 is modified by the provision of a fixed flow restrictor 20 in the inlet conduit 4. This is arranged to give a known pressure requirement immediately upstream the flow restrictor which corresponds to a particular required flow rate through the thermal load 10. An additional by-pass 22 is provided extending between the inlet conduit 4, downstream of the flow restrictor of the valve 12, to a point in the section B,C of the loop 3. In the by-pass 22 there is arranged a pressure activated valve 24, which opens above a predetermined pressure. This valve may comprise, for example, a spring-biased plate 26 which is urged against a valve seat 28. Here, the thermistor Q is disposed in the section B,C of loop 3, immediately opposite by-pass 22. An increase in the pressure or flow conditions upstream of the loop, will increase the flow rate through the flow restrictor 20 and the pressure exerted on the valve 24, which at a predetermined pressure will open, with the plate 26 lifting off the valve seat 28. This allows relatively hot water to impinge on thermistor Q, in comparison to the cooler return water at P. The controller 14 detects the temperature differential and adjusts valve 12 to close this sufficiently so that the flow through the loop is limited beneath a predetermined maximum value. This system still functions in the manner described above with reference to the embodiment of Figure 1, that is to control or avoid what constitutes an oversupply condition, with a reverse flow condition from C to B at oversupply, but is additionally provided with means for limiting flow rate below a predetermined maximum.

Figure 3 illustrates a still further embodiment in which, instead of a loop arrangement in which fluid is circulated, there is provided a thermal load 10 supplied from boiler 11 via inlet conduit 4, with return conduit 6 provided for the return of cool fluid back to the boiler 11. Pump 13 provides circulation of the fluid. Numeral 10 represents the thermal load at a particular dwelling constituted by radiators, heat exchangers for providing domestic hot water and the like. The system supplies other dwellings via lines indicated 4a, 6a, 4b, 6b, all supplied with heated water from single boiler 11. At the particular dwelling for which the control system is illustrated, a by-pass conduit 30 is provided between inlet and return conduits 4,6 which is provided with a pressure-actuated valve 32, such as a simple spring-loaded valve. As with the embodiment of Figure 2, thermistors P,Q are located respectively in the return conduit 6, upstream of the connection to the by-pass, and in the by-pass 30, or in the return conduit 6 at a position opposite the opening of the by-pass conduit into the return line 6, so that the sensor Q is influenced by the temperature of fluid passing through the by-pass conduit 30. Again any upstream increase in the pressure or flow rate in the system (caused for example by flow restriction in other dwellings in the complete system) will open valve 32 at a predetermined pressure differential across the valve, giving an increased temperature at Q, as compared to P. The controller 14 is programmed to restrict the flow through valve 12, thereby limiting the flow rate through the thermal load 10.

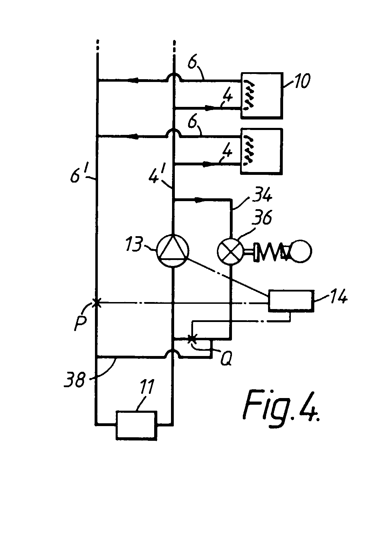

A still further embodiment utilising the concept of the present invention is illustrated in Figure 4. Figure 4 shows a system which supplies hot water to a plurality of dwellings which are fed by inlet conduits 4, each connected to boiler 11 via inlet conduit 4' and which return cold fluid via return conduits 6 connected to the inlet of the boiler 11 through return conduit 6'. A variable speed pump 13 is installed in the inlet conduit 4'. By-pass conduit 34 is connected to the inlet conduit 4', forming a by-pass about the pump 13. A spring-loaded valve 36 is provided in the by-pass conduit 34, which is arranged to open at a pressure exceeding a particular value. A connection constituted by a small bore bleed line 38 is provided between return conduit 6' and a point in the by-pass 34 between the valve 36 and connection to the inlet conduit 4', whereby a small proportion of cold return water is recirculated upstream of the pump. Thermistors P,Q constituting temperature sensors are provided in the return conduit 6' and in the by-pass 34 at a position which receives the flow from the bleed line 38. Controller 14 is connected to receive signals from the sensors P,Q and is connected to the pump 13.

The system operates to regulate the pressure or flow rate at the pump outlet, and hence at the inlets for the respective dwellings. If the flow at any particular dwelling is restricted (for example, at a thermostatically controlled valve or at a radiator) the pressure at the pump outlet rises, causing opening of the valve 36, so that a proportion of hot water recirculates via by-pass 34. The temperature indicated by sensor Q will rise above that indicated by sensor P, and in response to this differential, the controller 14 is arranged to lower the pump speed to appropriately decrease the pressure at the pump outlet. In response to further flow restriction the pump speed is lowered, down to a minimum set value. (Conventional pumps generally have a minimum speed at which reliable operation is achieved). With the pump operating at minimum speed further upstream pressure increases are avoided or reduced by increased flow through the by-pass line 34 back to the pump suction side. In this way, the pressure at the pump outlet can be regulated over a wide range of system flow resistances.

It is also possible for some or each of the respective dwellings supplied by conduits 4,6 to incorporate the flow control systems of Figures 1, 2 or 3, giving rise to a particularly effectively balanced overall system.

## Claims

1. A system for the control of flow of heating fluid to a thermal load, comprising an arrangement of conduits including a fluid inlet conduit for connection to a source of heated fluid through which hot fluid is passed to the thermal load, and a fluid return conduit through which cooled fluid from the thermal load is returned to the source, wherein the system includes a conduit portion (BC) adapted to receive both cooled fluid from the thermal load (10) and a proportion of hot inlet fluid in response to an oversupply of hot fluid and flow regulation means (12) arranged in the fluid inlet conduit and a first temperature sensor (P) adapted to detect cooled fluid from the thermal load passing through the return conduit, characterized by a second temperature sensor (Q) adapted to detect an increase in temperature in said conduit portion caused by an oversupply of hot fluid, and control means (14) adapted to receive the signals from said sensors (P, Q) and to adjust the flow regulation means (12) in response to a differential in temperature between the temperatures indicated by the first (P) and second (Q) temperature sensors.

2. A system according to claim 1, characterised in that the conduit arrangement comprises a connecting conduit which connects said inlet conduit and return conduit adapted to receive hot fluid from the inlet conduit in response to an oversupply of hot fluid, and said first temperature sensor (P) is disposed in the return conduit upstream of the connecting conduit.

3. A system according to claim 2, characterised in that said second temperature sensor (Q) is disposed in the return conduit (6) downstream of the connecting conduit.

4. A system according to claim 2, characterised in that said second temperature sensor (Q) is disposed in said connecting conduit (BC).

5. A system according to claim 1 or 2, characterised in that the flow control conduit arrangement consists of an unrestricted conduit (BC) connecting the inlet and return conduits such that a loop is formed with the thermal load around which fluid circulates, into which hot fluid is injected via the fluid inlet conduit, and from which a proportion of the cooled fluid is removed via the fluid return line, whereby a condition of oversupply of hot fluid results in a reverse flow from the inlet conduit to return conduit in said connecting conduit.

6. A system according to claim 5, characterised in that the conduit arrangement comprises an additional by-pass conduit (22) connected between the inlet conduit and the connecting conduit, and wherein a pressure actuated valve (24) is provided within this by-pass conduit, adapted to open in response to a pressure in the inlet conduit (4) in excess of a predetermined value.

7. A system according to any one of claims 1 to 4, characterised in that the conduit arrangement comprises a conduit portion (30) connecting said inlet and return conduits, which conduit portion (30) is provided with a pressure actuated valve (32) adapted to open at a pressure in excess of a predetermined value.

8. A system according to any preceding claim, characterised in that the flow regulation means comprises a solenoid valve which is electrically connected to the control means.

9. A system according to claim 2, characterised in that the conduit arrangement further comprises a by-pass conduit (34) connected between the inlet conduit downstream of the flow regulation means (13) and the connecting conduit (38), with the second temperature sensor (Q) disposed in the connection conduit at a point between connections with the inlet conduit and by-pass conduit, wherein a pressure actuated valve (36) is located in the by-pass conduit and is adapted to open in response to a pressure at the pump outlet in excess of a predetermined value, and wherein the flow regulation means comprises a variable speed pump (13), said control (14) means being arranged to adjust the pump speed in response to a detected temperature differential.

10. A system according to claim 5, 6 or 7, characterised in that the pressure actuated valve is a spring biased valve.

11. A system according to any preceding claim, characterised in that the control means comprises a microprocessor.

12. A system according to any preceding claim, characterised in that the temperature sensors comprise thermistors.

13. A system according to any preceding claim, characterised in that an air temperature sensor is additionally connected to the control means, which is adapted to control the flow regulation means in dependence on the detected temperature.

14. A method of controlling a heating system comprising a thermal load connected to a conduit arrangement whereby the thermal load is supplied with hot fluid from a heat source via an inlet conduit and including a return conduit which returns cooled fluid to the heating source, and including a conduit portion adapted to receive both cooled fluid from the thermal load and a proportion of hot inlet fluid in response to an oversupply of hot fluid, and flow regulation means disposed in the inlet conduit and detecting a first temperature of fluid in the return conduit, characterised in that the method comprises detecting a second temperature of fluid passing through said conduit portion which includes hot inlet fluid in response to an oversupply of fluid, and restricting the flow regulation means in response to a detected temperature differential between said first and second temperatures.

15. A method according to claim 14, wherein the conduit arrangement includes a connecting conduit which connects inlet and return conduits which is adapted to receive hot fluid from the inlet conduit in response to an oversupply of hot fluid, characterised in that the first temperature of fluid in the return conduit is detected upstream of the connecting conduit.

16. A method according to claim 15, characterised in that the second temperature of fluid passing through said conduit portion is detected in the return conduit downstream of the conduit portion.

17. A method according to claim 15, characterised in that the second temperature of fluid passing through the conduit portion is detected in the conduit portion.

## Patentansprüche

1. System zur Regelung der Strömung von Wärmefluid zu einer Thermallast, mit einer Anordnung von Leitungen, die eine Fluideinlassleitung zur Verbindung mit einer Quelle erwärmten Fluids umfassen, durch welche hindurch heißes Fluid zur Thermallast geführt wird, und einer Fluidrückführungsleitung, durch welche hindurch gekühltes Fluid von der Thermallast zur Quelle zurückgeführt wird, wobei das System einen Leitungsabschnitt (BC) umfasst, der angepasst ist, um sowohl gekühltes Fluid von der Thermallast (10) als auch einen Anteil des heißen Einlassfluides in Reaktion auf eine Überspeisung heißen Fluides aufzunehmen, sowie eine Strömungsregelungseinrichtung (12), die in der Fluideinlassleitung angeordnet ist, und einen ersten Temperatursensor (P), der angepasst ist, um gekühltes Fluid aus der Thermallast zu detektieren, welches durch die Rückführungsleitung hindurchgeht, gekennzeichnet durch einen zweiten Temperatursensor (Q), der angepasst ist, um eine Erhöhung der Temperatur in dem Leitungsabschnitt zu detektieren, die bewirkt wird durch eine Ü-berspeisung heißen Fluides, und eine Regelungseinrichtung (14), die angepasst ist, um die Signale von den Sensoren (P, Q) aufzunehmen und die Strömungsregelungseinrichtung (12) in Reaktion auf eine Temperaturdifferenz zwischen den Temperaturen einzustellen, die durch den ersten und den zweiten Temperatursensor angezeigt werden.

2. System nach Anspruch 1, dadurch gekennzeichnet, dass die Leitungsanordnung eine Verbindungsleitung aufweist, welche die Einlassleitung und die Rückführungsleitung verbindet und angepasst ist, um heißes Fluid von der Einlassleitung in Reaktion auf eine Überspeisung mit heißem Fluid aufzunehmen, wobei der erste Temperatursensor (P) in der Rückführungsleitung stromaufwärts von der Verbindungsleitung angeordnet ist.

3. System nach Anspruch 2, dadurch gekennzeichnet, dass der zweite Temperatursensor (Q) in der Rückführungsleitung (6) stromabwärts von der Verbindungsleitung angeordnet ist.

4. System nach Anspruch 2, dadurch gekennzeichnet, dass der zweite Temperatursensor in der Verbindungsleitung (BC) angeordnet ist.

5. System nach Anspruch 1 oder 2, dadurch gekennzeichnet, dass die Strömungsregelungs-Leitungsanordnung aus einer freien Leitung (BC) besteht, welche die Einlass- und Rückführungsleitung so verbindet, dass eine Schleife mit der Thermallast gebildet wird, um die herum das Fluid zirkuliert, in welche hinein heißes Fluid über die Fluideinlassleitung eingeführt wird und aus welcher ein Anteil des gekühlten Fluids über die Fluidrückführungsleitung entfernt wird, wodurch ein Zustand der Überspeisung mit heißem Fluid in einer umgekehrten Strömung von der Einlassleitung zur Rückführungsleitung in der Verbindungsleitung resultiert.

6. System nach Anspruch 5, dadurch gekennzeichnet, dass die Leitungsanordnung eine zusätzliche Bypassleitung (22) umfasst, die zwischen der Einlassleitung und der Verbindungsleitung eingebunden ist, wobei ein druckbetätigtes Ventil (24) in dieser Bypassleitung vorgesehen ist, welches angepasst ist, um in Reaktion auf einen Druck in der Einlassleitung (4), der einen vorbestimmten Wert überschreitet, geöffnet zu werden.

7. System nach einem der Ansprüche 1 bis 4, dadurch gekennzeichnet, dass die Leitungsanordnung einen Leitungsabschnitt (30) umfasst, welcher die Einlassleitung und die Rückführungsleitung verbindet, wobei der Leitungsabschnitt (30) mit einem druckbetätigten Ventil (32) versehen ist, das angepasst ist, um bei einem Druck, der einem vorbestimmten Wert überschreitet, zu öffnen.

8. System nach einem der vorhergehenden Ansprüche, dadurch gekennzeichnet, dass die Strömungsregelungseinrichtung ein Solenoidventil umfasst, welches elektrisch mit der Regelungseinrichtung verbunden ist.

9. System nach Anspruch 2, dadurch gekennzeichnet, dass die Leitungsanordnung ferner eine Bypassleitung (34) umfasst, die zwischen der Einlassleitung stromabwärts von der Regelungseinrichtung (13) und der Verbindungsleitung (38) eingebunden ist, wobei der zweite Temperatursensor (Q) in der Verbindungsleitung an einem Punkt zwischen den Verbindungen mit der Einlassleitungen und der Bypassleitung angeordnet ist, wobei ein druckbetätigtes Ventil (36) in der Bypassleitung angeordnet und angepasst ist, um in Reaktion auf einen Druck am Pumpenauslass, der einen vorbestimmten Wert überschreitet, zu öffnen, und wobei die Strömungsregelungseinrichtung eine Pumpe (13) mit variabler Drehzahl umfasst, wobei die Regelungseinrichtung (14) angeordnet ist, um die Pumpendrehzahl in Reaktion auf eine detektierte Temperaturdifferenz einzustellen.

10. System nach Anspruch 5, 6 oder 7, dadurch gekennzeichnet, dass das druckbetätigte Ventil ein federvorgespanntes Ventil ist.

11. System nach einem der vorhergehenden Ansprüche, dadurch gekennzeichnet, dass die Regelungseinrichtung einen Mikroprozessor umfasst.

12. System nach einem der vorhergehenden Ansprüche, dadurch gekennzeichnet, dass die Temperatursensoren Thermistoren umfassen.

13. System nach einem der vorhergehenden Ansprüche, dadurch gekennzeichnet, dass ein Lufttemperatursensor zusätzlich mit der Regelungseinrichtung verbunden ist, welche angepasst ist, um die Strömungsregelungseinrichtung in Abhängigkeit von der detektierten Temperatur zu regeln.

14. Verfahren zur Regelung eines Wärmesystems mit einer Thermallast, die mit einer Leitungsanordnung verbunden ist, wodurch die Thermallast mit einem heißen Fluid aus einer Wärmequelle über eine Einlassleitung versorgt wird, und mit einer Rückführungsleitung, welche gekühltes Fluid zur Wärmequelle zurückführt, und mit einem Leitungsabschnitt, der angepasst ist, um sowohl gekühltes Fluid aus der Thermallast als auch einen Anteil von heißem Fluid in Reaktion auf eine Überspeisung mit heißem Fluid aufzunehmen, sowie mit einer Strömungsregulierungseinheit, die in der Einlassleitung angeordnet ist und eine erste Temperatur des Fluids in der Rückführungsleitung detektiert, dadurch gekennzeichnet, dass das Verfahren das Detektieren einer zweiten Temperatur des Fluids umfasst, welches durch den Leitungsabschnitt hindurchgeht, der heißes Fluid umfasst, und zwar in der Reaktion auf eine Fluidüberspeisung, sowie das Abregeln der Strömungsregulierungseinrichtung in Reaktion auf eine detektierte Temperaturdifferenz zwischen der ersten und zweiten Temperatur.

15. Verfahren nach Anspruch 14, bei dem die Leitungsanordnung eine Verbindungsleitung umfasst, welche die Einlass- und Auslassleitung verbindet und angepasst ist, um heißes Fluid von der Einlassleitung in Reaktion auf eine Überspeisung mit heißem Fluid aufzunehmen, dadurch gekennzeichnet, dass die erste Temperatur des Fluids in der Rückführungsleitung stromaufwärts von der Verbindungsleitung detektiert wird.

16. Verfahren nach Anspruch 15, dadurch gekennzeichnet, dass die zweite Temperatur des Fluids, welches durch den Leitungsabschnitt hindurchgeht, in der Rückführungsleitung stromabwärts von dem Leitungsabschnitt detektiert wird.

17. Verfahren nach Anspruch 17, dadurch gekennzeichnet, dass die zweite Temperatur des Fluids, welches durch den Leitungsabschnitt hindurchgeht, in dem Leitungsabschnitt detektiert wird.

## Revendications

1. Système pour la commande d'un écoulement d'un fluide chauffant vers une charge thermique, comportant un agencement de conduits comprenant un conduit d'entrée de fluide destiné à être raccordé à une source de fluide chauffé et par lequel un fluide chaud est amené à la charge thermique, et un conduit de retour de fluide par lequel du fluide refroidi provenant de la charge thermique est ramené à la source, dans lequel le système comprend un tronçon de conduit (BC) conçu pour recevoir à la fois du fluide refroidi provenant de la charge thermique (10) et une proportion de fluide chaud d'entrée en réponse à une suralimentation en fluide chaud et un moyen (12) de régulation d'écoulement agencé dans le conduit d'entrée de fluide et un premier capteur (P) de température conçu pour détecter un fluide refroidi provenant de la charge thermique passant dans le conduit de retour, caractérisé par un second capteur (Q) de température conçu pour détecter une élévation de la température dans ledit tronçon de conduit due à une suralimentation en fluide chaud, et un moyen de commande (14) conçu pour recevoir les signaux provenant desdits capteurs (P, Q) et pour ajuster le moyen (12) de régulation d'écoulement en réponse à une différence entre les températures indiquées par les premier (P) et second (Q) capteurs de température.

2. Système selon la revendication 1, caractérisé en ce que l'agencement de conduits comprend un conduit de raccordement qui raccorde ledit conduit d'entrée et ledit conduit de retour et conçu pour recevoir du fluide chaud du conduit d'entrée en réponse à une suralimentation en fluide chaud, et ledit premier capteur (P) de température est disposé dans le conduit de retour en amont du conduit de raccordement.

3. Système selon la revendication 2, caractérisé en ce que ledit second capteur (Q) de température est disposé dans le conduit de retour (6) en aval du conduit de raccordement.

4. Système selon la revendication 2, caractérisé en ce que ledit second capteur (Q) de température est disposé dans ledit conduit (BC) de raccordement.

5. Système selon la revendication 1 ou 2, caractérisé en ce que l'agencement de conduits de commande d'écoulement consiste en un conduit non étranglé (BC) raccordant les conduits d'entrée et de retour afin que soit formée avec la charge thermique une boucle dans laquelle un fluide circule, dans laquelle du fluide chaud est injecté par l'intermédiaire du conduit d'entrée de fluide et de laquelle une proportion du fluide refroidi est enlevée en passant par le conduit de retour de fluide, grâce à quoi une condition de suralimentation en fluide chaud a pour résultat un écoulement inverse du conduit d'entrée vers le conduit de retour dans ledit conduit de raccordement.

6. Système selon la revendication 5, caractérisé en ce que l'agencement de conduits comprend un conduit additionnel de dérivation (22) raccordé entre le conduit d'entrée et le conduit de raccordement, et dans lequel une soupape (24) actionnée par pression est prévue dans ce conduit de dérivation, et est conçue pour s'ouvrir en réponse à une pression dans le conduit d'entrée (4) supérieure à une valeur prédéterminée.

7. Système selon l'une quelconque des revendications 1 à 4, caractérisé en ce que l'agencement de conduits comporte un tronçon de conduit (30) raccordant lesdits conduits d'entrée et de retour, lequel tronçon de conduit (30) est pourvu d'une soupape (32) actionnée par pression conçue pour s'ouvrir à une pression supérieure à une valeur prédéterminée.

8. Système selon l'une quelconque des revendications précédentes, caractérisé en ce que le moyen de régulation d'écoulement comporte une électrovanne qui est connectée électriquement au moyen de commmande.

9. Système selon la revendication 2, caractérisé en ce que l'agencement de conduits comporte en outre un conduit de dérivation (34) raccordé entre le conduit d'entrée en aval du moyen (13) de régulation d'écoulement et le conduit (38) de raccordement, le second capteur (Q) de température étant disposé dans le conduit de raccordement en un point situé entre des raccordements avec le conduit d'entrée et le conduit de dérivation, dans lequel une soupape (36) actionnée par pression est placée dans le conduit de dérivation et est conçue pour s'ouvrir en réponse à une pression à la sortie de la pompe supérieure à une valeur prédéterminée, et dans lequel le moyen de régulation d'écoulement comporte une pompe (13) à vitesse variable, ledit moyen de commande (14) étant agencé pour régler la vitesse de la pompe en réponse à une différence de température détectée.

10. Système selon la revendication 5, 6 ou 7, caractérisé en ce que la soupape actionnée par pression est une soupape rappelée par ressort.

11. Système selon l'une quelconque des revendications précédentes, caractérisé en ce que le moyen de commande comporte un microprocesseur.

12. Système selon l'une quelconque des revendications précédentes, caractérisé en ce que les capteurs de température comprennent des thermistances.

13. Système selon l'une quelconque des revendications précédentes, caractérisé en ce qu'un capteur de température d'air est connnecté additionnellement au moyen de commande, lequel est conçu pour commander le moyen de régulation d'écoulement en fonction de la température détectée.

14. Procédé de commande d'un système de chauffage comportant une charge thermique raccordée à un agencement de conduits par lequel la charge thermique est alimentée en fluide chaud à partir d'une source de chaleur en passant par un conduit d'entrée et comprenant un conduit de retour qui ramène du fluide refroidi à la source de chaleur, et comprenant un tronçon de conduit conçu pour recevoir à la fois du fluide refroidi provenant de la charge thermique et une proportion de fluide chaud d'entrée en réponse à une suralimentation en fluide chaud, et un moyen de régulation d'écoulement disposé dans le conduit d'entrée et détectant une première température de fluide dans le conduit de retour, caractérisé en ce que le procédé comprend la détection d'une seconde température de fluide passant dans ledit tronçon de conduit qui comprend un fluide chaud d'entrée en réponse à une suralimentation en fluide, et l'étranglement du moyen de régulation d'écoulement en réponse à une différence détectée entre lesdites première et seconde températures.

15. Procédé selon la revendication 14, dans lequel l'agencement de conduits comprend un conduit de raccordement qui raccorde les conduits d'entrée et de retour et qui est conçu pour recevoir du fluide chaud du conduit d'entrée en réponse à une suralimentation en fluide chaud, caractérisé en ce que la première température du fluide dans le conduit de retour est détectée en amont du conduit de raccordement.

16. Procédé selon la revendication 15, caractérisé en ce que la seconde température du fluide passant dans ledit tronçon de conduit est détectée dans le conduit de retour en aval du tronçon de conduit.

17. Procédé selon la revendication 15, caractérisé en ce que la seconde température du fluide passant dans le tronçon de conduit est détectée dans le tronçon de conduit.
